# EUROPÄISCHE PATENTSCHRIFT

(11) **EP 2 742 009 B1**
(45) Veröffentlichungstag und Bekanntmachung des Hinweises auf die Patenterteilung: **14.11.2018**
(21) Anmeldenummer: 12746280.2
(22) Anmeldetag: 02.08.2012
(51) Int. Cl.: C03B 40/02, G02B 6/42, G02B 6/43, C03B 23/02

(54) **VERFAHREN ZUM STRUKTURIEREN EINES AUS GLASARTIGEM MATERIAL BESTEHENDEN FLÄCHENSUBSTRATS SOWIE OPTISCHES BAUELEMENT**
METHOD FOR STRUCTURING A FLAT SUBSTRATE COMPOSED OF GLASS-TYPE MATERIAL, AND OPTICAL COMPONENT
PROCÉDÉ PERMETTANT DE STRUCTURER UN SUBSTRAT PLAT COMPOSE D'UN MATERIAU VITREUX ET COMPOSANT OPTIQUE

(30) Priorität: 12.08.2011 DE 102011110166
(43) Veröffentlichungstag der Anmeldung: 18.06.2014
(73) Patentinhaber: Fraunhofer Gesellschaft zur Förderung der angewandten Forschung E.V., 80686 München (DE)
(72) Erfinder: MARENCO, Norman, 25551 Winseldorf (DE); QUENZER, Hans-Joachim, 25524 Itzehoe (DE)
(74) Vertreter: Rösler, Uwe
(86) Internationale Anmeldenummer: PCT/EP2012/003332
(87) Internationale Veröffentlichungsnummer: WO 2013/023750

(56) Entgegenhaltungen:
- EP-B1- 1 572 594
- DE-B3- 10 313 889

## Beschreibung

### Technisches Gebiet

Die Erfindung bezieht sich auf ein Verfahren zum Strukturieren eines aus glasartigem Material bestehenden Flächensubstrats im Wege eines viskosen Fliessprozesses, bei dem das glasartige Flächensubstrat auf eine Oberfläche eines Flächensubstrats, vorzugsweise eines Halbleiterflächensubstrats, das wenigstens eine von einem in der Oberfläche liegenden Umfangsrand begrenzte Vertiefung besitzt, gefügt und im Wege eines darauf folgenden Temperprozesses in einen viskos fliessfähigen Zustand überführt wird, bei dem zumindest Anteile des fliessfähigen glasartigen Materials des Flächensubstrat über den Umfangsrand in die Vertiefung des Flächensubstrats fliessen. Ferner wird ein optisches Bauelement beschrieben, das mit einem vorstehenden Verfahren herstellbar ist.

### Stand der Technik

Fertigungsverfahren zur Herstellung optischer Komponenten mit den Mitteln der Siliziumtechnologie bzw. der Waferfertigung ermöglichen miniaturisierte Ausbildungen von optischen oder Mikro-Opto-Elektro-Mechanischen Systemen, kurz MOEMS, letztere sehen optische Komponenten als Bestandteil einer Gehäusekomponente in sog. "Wafer Level Packages" (WLP) vor. Derartige Verfahren besitzen zudem ein großes Potenzial zur Einsparung von Kosten, da hunderte bis tausende Komponenten parallel auf einem Wafer prozessiert werden können. Zudem können auf jegliche Fügewerkzeuge sowie Justagehilfen bei der Fügung der optischen Komponenten mit diese stützenden, mikromechanischen Befestigungsstrukturen verzichtet werden, zumal die Fertigungsverfahren mechanisch sehr präzise Fügemechanismen verfahrensbedingt umfassen.

Ein diesbezügliches Fertigungsverfahren ist bspw. in der EP 1 606 223 B1 beschrieben, das zur Herstellung optischer Oberflächen auf der Basis von viskosem Fließen von Glas beruht. Hierzu werden ein erster Wafer aus einer ersten Glassorte mit einem zweiten Wafer aus Silizium oder einer zweiten, höherschmelzenden Glassorte miteinander verbunden, z.B. durch anodisches Bonden oder Direktbonden (Fusion Bonding). Der zweite Wafer weist an einer seiner beiden planen Oberflächen Vertiefungen auf, die ein dreidimensional gestaltetes Oberflächenprofil vorgeben, das durch die Vertiefungen einseitig offen strukturierte Kavitäten einschließt. Während die planen Oberflächenbereiche nach dem Bonden fest mit dem ersten Wafer verbunden sind, ermöglichen die Kavitäten ein freies Fließen des Glasmaterials des ersten Wafers, sobald dieser in einem Temperprozess bei z.B. 700 - 800°C eine hinreichendniedrige Viskosität erreicht. Während des freien Fließens des Glases in die Kavitäten des strukturierten zweiten Wafers wird die Ausformung der Oberfläche des ersten Wafers maßgeblich von der Oberflächenspannung des Glases bestimmt. So bilden sich in Abhängigkeit von der Druckdifferenz zwischen den tief strukturierten Kavitäten und der Atmosphäre in der Ofenkammer an der den Kavitäten zugewandten Oberfläche des ersten Wafers konkave oder konvexe Strukturen aus.

Ferner wird der Glasfließprozess durch weitere Faktoren beeinflusst, so bspw. durch die geometrische Ausgestaltung der Fließfront des in die Kavitäten einmündenden, viskosen Glasmaterials sowie das durch den Materialtransport des Glases verdrängte Gasvolumen. Der Fließprozess stoppt, sobald ein Ausgleich zwischen dem Innendruck und dem Umgebungsdruck erreicht ist, wenn die Kavität vollständig ausgefüllt ist, sofern sie zuvor evakuiert wurde, oder wenn die Viskosität des Glasmaterials nicht mehr zum Fließen ausreicht. Letzteres ist beim Verarbeiten von Glas in der Regel durch Absenken der Prozesstemperatur unter einen kritischen Temperaturwert der Fall.

Neben der Verwendung von Glas lassen sich auch transparente Polymere zur Herstellung optischer Komponenten im Wege des vorstehend beschriebenen Verfahrens des viskosen Fließens einsetzen. Bei geeignet gewählten Polymeren lässt sich die Viskosität z.B. auch durch photoinduziertes chemisches Härten kontrolliert reduzieren, um auf diese Weise einen Fließstopp zu erreichen.

In den bisher bekannten Variationen des Verfahrens des viskosen Fließens wird eine zweidimensionale Strukturebene zur Festlegung der Basisform der sich ausbildenden optischen Komponente eingesetzt, während sich deren Höhenprofil durch die Prozessführung ergibt. Beispielsweise lassen sich optische Linsen mit sphärischem Profil auf diese Weise gut herstellen, da sich die sphärische Form aus einer kreisrunden Basisform und einer sich im Kräftegleichgewicht befindlichen Oberfläche ergibt. Durch das Einbeziehen von dynamischen Fließbewegungen lassen sich auch sog. asphärische Korrekturen, d.h. konische oder hyperbolische Komponenten der sphärischen Grundform überlagern.

Das Verfahren des viskosen Fließens ist für die Herstellung optischer Bauelemente mit sich frei ausformbaren optischen Oberflächen oder von besonders glatten Freiformflächen, die zur Abformung, bspw. mittels Prägetechnik, dienen, insbesondere deshalb besonders vorteilhaft, da kein mechanisches Polieren oder Nachbearbeiten der Oberflächen erforderlich ist. Eine bereits bekannte Nutzung des Verfahrens ist dementsprechend auch die Herstellung einer Replikationsform aus einem höherschmelzenden Glas, das wie oben beschrieben, als zweiter Wafer zur Abformung des ersten Wafers eingesetzt werden kann. Allerdings stehen dem Anwender zur Ausformung einer dreidimensionalen Struktur beim freien viskosen Fließen jedoch nur die physikalischen Effekte der Oberflächenbenetzung und der Oberflächenspannung zur Verfügung.

Aus der EP 1 572 594 B1 ist ein Verfahren zum Nachbehandeln von vorstehend beschriebenen optischen Linsen zu entnehmen, bei dem elliptische Übersteilungen im Übergangsbereich zwischen Linse und glasartigem Flächensubstrat mittels eines Formwerkzeug unterstützten thermischen Nachbehandlungsschritt beseitigt werden können.

Problematisch dagegen ist die Herstellung weitgehend beliebig geneigter planer Oberflächen, die sich als Spiegel oder als optisches Prisma einsetzen lassen. Auch das Herstellen von entlang einer beliebigen Kontur geneigter Oberflächen, z.B. in Form eines gleich- oder schiefwinkligen planparallelen Pyramidensegments, ist mit dem bisherigen Verfahren des viskosen Fließens nicht möglich.

Vielmehr basieren bekannte Herstellungsverfahren zu Schaffung vorstehender Strukturen auf Replikationsverfahren wie dem Blankpressen von Linsen. Bei diesen Abformtechniken von Glas können aufgrund der hohen Arbeitstemperaturen nur Materialien für den Formenbau in Frage kommen, die hohen Temperaturen und Drucken standzuhalten in der Lage sind. Dennoch erlauben solche Verfahren nur die Replikation kleiner Werkstücke und keiner ganzen Wafer. Im Bereich der Wafertechnologien finden als subtraktive Verfahren das Diamantschleifen mit hochpräzisen numerischen Maschinen Verwendung, um mikrostrukturierte Oberflächen mit nahezu optischen Qualitäten zu schaffen. Ultraschallbearbeitungen und Laser Direktstrukturierung sind weitere Alternativen hierzu. Mit Hilfe von chemischen Nachbehandlungen können die Oberflächen auf meist hinreichende optische Qualität geglättet werden. Weiterhin gibt es chemische Ätztechniken, die eine Strukturierung von Höhenprofilen erlauben. Additive Verfahren wie Aufdampfen kommen für Höhenprofile von mehreren Mikrometern eher selten in Frage DE 10313889 beschreibt ein Verfahren zur Herstellung von Mikrolinsen unter Verwendung eines Substrats mit einer Vertiefung aufweisenden Oberfläche.

### Darstellung der Erfindung

Der Erfindung liegt die Aufgabe zugrunde, ein Verfahren zum Strukturieren eines aus glasartigem Material bestehenden Flächensubstrats im Wege eines viskosen Fliessprozesses, bei dem das glasartige Flächensubstrat auf eine Oberfläche eines Flächensubstrats, das wenigstens eine von einem in der Oberfläche liegenden Umfangsrand begrenzte Vertiefung besitzt, gefügt und im Wege eines darauf folgenden Temperprozesses in einen viskos fliessfähigen Zustand überführt wird, bei dem zumindest Anteile des fliessfähigen glasartigen Materials des Flächensubstrat über den Umfangsrand in die Vertiefung des Flächensubstrats fliessen, derart weiterzubilden, um weitgehend beliebig geneigte, plane Oberflächen aus dem glasartigen Material dauerhaft formen zu können. Desweiteren soll es möglich sein diese planen Oberflächen bedarfsweise mit einer positiven oder negativen Krümmung zu versehen. Mit Hilfe des lösungsgemäßen Verfahrens soll es ferner möglich sein optische Bauelemente herzustellen, die über ein hohes Maß an optischer Integrationsfähigkeit verfügen.

Die Lösung der der Erfindung zugrunde liegenden Aufgabe ist in den Ansprüchen 1, 2 und 3 angegeben. Ein lösungsgemäß ausgebildetes optisches Bauelement ist Gegenstand des Anspruches 14. Den Erfindungsgedanken vorteilhaft weiterbildende Merkmale sind Gegenstand der Unteransprüche sowie der weiteren Beschreibung, insbesondere unter Bezugnahme auf die Ausführungsbeispiele zu entnehmen.

Lösungsgemäß ist ein Verfahren zum Strukturieren eines aus glasartigem Material bestehenden Flächensubstrates im Wege eines viskosen Fließprozesses nach den Merkmalen des Oberbegriffes des Anspruches 1 dadurch ausgebildet, dass ein Flächensubstrat bereitgestellt wird, dessen wenigstens eine Vertiefung wenigstens eine Benetzungsfläche aufweist, die gegenüber der Oberfläche des Flächensubstrates abgesenkt ist und wenigstens teilweise von einem linienartigen Rand begrenzt ist, der zugleich ein Rand einer gegenüber der Benetzungsfläche abgesenkten innerhalb der Vertiefung vorgesehenen Grabenstruktur ist und/oder durch eine unstete Änderung einer der Benetzungsfläche zuordenbaren Benetzungseigenschaft für das fließfähige glasartige Material bestimmt ist. Während des Temperprozesses wird das fließfähige glasartige Material mit der Benetzungsfläche derart in Kontakt gebracht, so dass sich längs des linienartigen Randes eine raumstabile Benetzungsfront ausbildet, wobei der Temperprozess unter Ausbildung einer sich zwischen der Benetzungsfront und dem Umfangsrand berührungslos zum Flächensubstrat erstreckenden Oberfläche des glasartigen Materials, die mit einem Teilbereich der Vertiefung eine Kavität einschließt, beendet wird.

Als Flächensubstrat wird im Weiteren von einem Halbleiterflächensubstrat, bspw. Silizium, ausgegangen, zumal zum einen Halbleitermaterialien über höhere Schmelztemperaturen als Glas verfügen - dies ist eine wesentliche Voraussetzung für das eingesetzte Flächensubstrat -, zum anderen ermöglichen Halbleitermaterialien den Einsatz von in der Halbleitertechnologie bekannter Strukturierungsverfahren. Selbstverständlich können jedoch auch andere, höherschmelzende Materialien verglichen zu Glas verwendet werden, bspw. Keramiken oder ausgewählte Metalle oder Metalllegierungen.

Die der Erfindung zugrunde liegende Idee sieht ein kontrolliertes in Kontakt bringen des viskos fließfähigen glasartigen Materials mit einer Benetzungsfläche vor, die sich innerhalb einer Vertiefung des oberflächenstrukturierten Halbleiterflächensubstrats befindet. Die Benetzungsfläche ist gegenüber der Oberfläche des Halbleiterflächensubstrates abgesenkt und in lateraler Flächenerstreckung von einem linienartigen geometrischen und/oder virtuellen Flächenrand begrenzt, der zugleich als Fließgrenze für die viskos fließende Glasmasse dient.

Während des Fließvorganges breitet sich das erweichte viskos fließfähige Glasmaterial des Flächensubstrates über den die Vertiefung an der Oberfläche des Halbleiterflächensubstrates begrenzenden Umfangsrand in die Vertiefung hinein aus und gelangt in Kontakt mit der dort vorgesehenen Benetzungsfläche, wobei sich zwischen dem Kontaktbereich des Glasmaterials und den seitlichen, die Vertiefung begrenzenden Wänden des Halbleitersubstrates eine sich berührunglos zum Halbleitersubstrat erstreckende Oberfläche des glasartigen Materials ausbildet, die einerseits vom Umfangsrand der Vertiefung an der Oberfläche des Halbleitersubstrats und andererseits von einer sich auf der Benetzungsfläche ausbildenden Benetzungsfront begrenzt wird.

Die sich im Wege des weiteren Fließprozesses in Richtung des Benetzungsflächenrandes ausbreitende Benetzungsfront des mit der Benetzungsfläche in Kontakt stehenden viskos fließfähigen Glases wird bei Erreichen des Benetzungsrandes an einer weiteren lateralen Ausbreitung in der Ebene der Benetzungsfläche gehindert. Somit lassen sich durch die geometrische Ausbildung des linienartigen Benetzungsflächenrandes Form und Größe der sich zwischen dem Umfangsrand und dem Benetzungsrand berührungslos zum Halbleitersubstrat ausbildenden Oberfläche des glasartigen Materials festlegen. Werden beispielsweise zumindest Abschnitte des Umfangsrandes sowie des Benetzungsflächenrandes geradlinig ausgebildet, wobei beide Randbereiche zueinander parallel verlaufen, so bildet sich eine eben bzw. planar geneigte Oberfläche zwischen beiden Randbereichen aus.

Der als Benetzungsstopp dienende linienartig ausgebildete Rand an der Benetzungsfläche lässt sich grundsätzlich in zweierlei Weise realisieren.
a) Zum einen kann eine lokale bzw. selektive mechanische und/oder chemische Oberflächenbehandlung des Bodens der Vertiefung die Benetzungseigenschaften des viskos fließfähigen Glases so verändern, so dass sich die Benetzungsfront des fließfähigen Glases auf dem oberflächenbehandelten Bodenbereich schneller ausbreitet als in anderen, nicht oberflächenbehandelten Bodenbereichen. Die auf diese Weise hergestellte Benetzungsfläche stellt somit jenen Flächenbereich des Bodens der Vertiefung dar, der eine Oberflächenbehandlung erfahren hat und grenzt sich an ihrem oberflächenbehandelten Umfangsrand von dem nicht behandelten Bodenbereich lediglich durch eine virtueller Randlinie ab, an der ein unsteter Übergang in den Benetzungseigenschaften zu beobachten ist. Besonders geeignete Oberflächenbehandlungen sehen beispielsweise die Abscheidung einer SiO₂-Schicht auf einem Si-Flächensubstrat vor.
b) Die andere Möglichkeit zur Herstellung einer von einem linienartigen Rand umgebenen Benetzungsfläche besteht im Vorsehen einer Grabenstruktur, die die Benetzungsfläche zumindest bereichsweise, vorzugsweise vollumfänglich, umgibt, um auf diese Weise durch geometrische Formgebung einen linienartigen Randverlauf zu schaffen, an dem eine laterale Ausbreitung der Benetzungsfront des viskos fließfähigen Glasmaterials gestoppt wird. Selbstverständlich ist es möglich, beide Maßnahmen a) und b) zur Ausbildung einer linienartig lateralen Begrenzung einer Benetzungsfläche zu kombinieren.

Um ein unkontrolliertes Überfließen des viskos glasartigen Materials über den linienartigen Rand der Benetzungsfläche auszuschließen, wird der Fließvorgang bei Erreichen der Benetzungsfront am linienartigen Rand der Benetzungsfläche durch Absenken der Prozesstemperatur beendet, wodurch die Viskosität erhöht und die Fließfähigkeit reduziert wird.

Zudem lässt sich Einfluss auf das Ausbreitungsverhalten der Benetzungsfront längs der Benetzungsfläche durch die Veränderung der Druckverhältnisse innerhalb der Ofen- bzw. Prozesskammer nehmen, in der der Tempervorgang durchgeführt wird.

In einer bevorzugten Verfahrensweise wird vor Durchführen des Temperschrittes das glasartige Flächensubstrat auf die mit Vertiefungen versehene Oberfläche des Halbleiterflächensubstrates mittels anodischem Bonden oder Direktbonden (fusion bonding) gasdicht gefügt. Der Fügevorgang erfolgt vorzugsweise in Gegenwart einer Gasatmosphäre unter einem vorgebbaren Prozess- bzw. Umgebungsdruck, der nach Verschließen der in dem Halbleitersubstrat eingebrachten Vertiefung mit dem glasartigen Flächensubstrat innerhalb der sich dabei ausbildenden Kavität gasdicht konserviert wird.

Während des in einem Temperofen erfolgenden Temperprozesses fließt das viskose Glasmaterial in die Kavität ein und reduziert dabei das in der Kavität vorhandene Gasvolumen, wobei das sich reduzierende Gasvolumen innerhalb der Kavität einerseits von Bereichen der Kavitätswand und andererseits von der sich zwischen der Benetzungsfront an der Benetzungsfläche und dem an der Oberfläche des Halbleitersubstrats befindlichen Umfangsrand ausbildenden freien Oberfläche des glasartigen Materials begrenzt wird.

Durch Erhöhen oder Reduzieren des in dem Temperofen vorherrschenden Prozessdruckes lässt sich das dynamische Fortschreiten der Benetzungsfront längs der Benetzungsfläche beeinflussen. So kann auf diese Weise beispielsweise ein laterales Fortschreiten der Benetzungsfront längs der Benetzungsfläche vollständig unterbunden werden, sofern der Prozessdruck innerhalb der Ofenkammer so eingestellt wird, dass sich der Druck des innerhalb der Kavität eingeschlossenen Gases einer weiteren lateralen Ausbreitung der Benetzungsfront entgegenstellt.

Mit dem lösungsgemäßen Verfahren ist es erstmals möglich, plane, berührungsfreie Glasoberflächen mit einer in weiten Bereichen einstellbaren Neigung zur Waferoberfläche, beispielsweise mit Neigungswinkeln zwischen 10° und 80° herzustellen. Derart plane, berührungsfreie Oberflächen bilden sich zwischen zwei geradlinig und parallel zueinander orientierten Randkonturen aus, von denen eine die auf der Benetzungsfläche durch deren Randverlauf vorgegebene Benetzungsfront des viskos fließfähigen Materials darstellt und die andere der Umfangsrand an der Halbleitersubstratoberfläche ist.

In vorteilhafter Weise bietet es sich zur Herstellung von planen Glasoberflächen an, den Temperprozess zu unterbrechen und einen offenen Zugang zur Kavität herzustellen. Bspw. wird hierzu rückseitig am Halbleitersubstrat ein Durchgangskanal zur vorderseitig mit dem glasartigen Flächensubstrat eingeschlossenen Kavität im Wege eines Ätz- oder Bohrvorganges geschaffen. In einem anschließenden Fortgang des Temperprozesses stellt sich durch den Durchgangskanal hindurch innerhalb der Kavität der gleiche Prozessdruck ein, der auch innerhalb des Temperofens vorherrscht. Infolgedessen bildet sich selbstständig eine plane Oberfläche aus, die über die geringste Oberflächenspannung verfügt, im Vergleich zu gekrümmten Oberflächengeometrien.

Auch ist es weiterhin möglich den Temperprozess abermals zu unterbrechen, um beispielsweise den Durchgangskanal zu verschließen, und anschließend erneut fortzufahren.

Wird darüber hinaus der Prozessdruck während des Tempervorganges kontrolliert geändert, so kann auf diese Weise zudem Einfluss auf die Formgebung der sich zwischen der Benetzungsfront und dem Umfangsrand berührungslos zum Halbleitersubstrat erstreckenden Oberfläche des glasartigen Materials genommen werden. Wird ausgehend vom Zustand einer sich zwischen der Benetzungsfront und dem Umfangsrand plan erstreckenden Oberfläche des glasartigen Materials der Prozessdruck innerhalb des Temperofens reduziert, so nimmt die sich ausbildende berührungslose Oberfläche des glasartigen Materials eine Konkavform an. Wird der Prozessdruck hingegen kontrolliert erhöht, so bildet sich eine konvexe freie, d.h. berührungslose Oberfläche des glasartigen Materials aus.

Darüber hinaus kann weiterer Einfluss auf die geometrische Ausbildung der sich berührungslos ausbildenden Oberfläche des glasartigen Materials genommen werden, indem die Randverläufe sowohl der unteren Benetzungsfront als auch des oberen Umfangsrandes abweichend von einer geradlinig parallelen Form geometrisch ausgestaltet werden, beispielsweise parabolisch oder kreisförmig. Auf diese Weise können entsprechend unterschiedlich geformte Oberflächenformen erzeugt werden. Den Variationsmöglichkeiten hinsichtlich der geometrischen Ausbildung sowohl der Benetzungsfront als auch des Umfangsrandes sind nahezu keinerlei Grenzen gesetzt und richten sich ausschließlich nach den wunschgemäß herzustellenden optischen Zieloberflächen.

Nach Beendigung des Tempervorganges richtet sich eine möglicherweise anschließende Prozessierung des Halbleiter-Glassubstratflächenverbundes nach dem technischen Einsatzzweck der lösungsgemäß berührungslos hergestellten Oberfläche des glasartigen Materials. Wie die weiterführende Beschreibung unter Bezugnahme auf die nachstehenden Ausführungsbeispiele zeigen wird, dient in einem bevorzugten Ausführungsfall die berührungslos ausgebildete Oberfläche des glasartigen Flächensubstrats als Replikationsform. Hierzu gilt es, das glasartige Flächensubstrat vom Halbleiterflächensubstrat nach Beenden des Temperprozesses Form erhaltend zu trennen. Der Trennvorgang kann beispielsweise mittels an sich bekannten Ätztechniken oder unter Verwendung einer Opferschicht durchgeführt werden, die vor in Kontakt bringen von dem aus glasartigem Material bestehenden Flächensubstrat und dem Halbleiterflächensubstrat zwischen beiden Substratflächen einzubringen ist.

In einem weiteren Anwendungsfall dient die lösungsgemäß berührungslos hergestellte Oberfläche des glasartigen Materials als optische Oberfläche zur Lichtlenkung innerhalb eines optischen Elementes. Hierzu gilt es, zumindest Teilbereiche zwischen dem glasartigen Flächensubstrat und dem Halbleiterflächensubstrat aufzutrennen. Eine bevorzugte Ausführungsform für ein derart ausgebildetes optisches Element sieht ein vollständig vom Halbleitersubstrat separiertes, aus glasartigem Material bestehendes Flächensubstrat vor, das auf der einen Seite lösungsgemäß strukturiert und auf der gegenüber liegenden Seite plan ausgebildet ist. Mittel- oder unmittelbar an der planen Oberfläche des aus glasartigem Material bestehenden Flächensubstrates ist eine Lichtquelle angeordnet, die Licht über die plane Oberfläche in das strukturierte, aus glasartigem Material bestehende Flächensubstrat derart einkoppelt, dass das Licht an der Lichtumlenkenden, optisch wirksamen Fläche innerhalb des aus glasartigem Material bestehenden Flächensubstrats umlenkbar ist.

Das lösungsgemäße optisches Bauelement, das über wenigstens eine optisch wirksamen Fläche verfügt, die Teil eines strukturierten, aus glasartigem Material bestehenden Flächensubstrats ist und der eine optische Achse zuordenbar ist, zeichnet sich dadurch aus, dass die optische Achse mit einer dem Flächensubstrat zuordenbaren Flächensubstratebene einen Winkel α einschließt, der ungleich 0° und 90° ist, wobei die optisch wirksame Fläche eine Oberflächenglätte aufweist, die einer Oberflächenglätte einer berührungslos, aus glasartigen Material hergestellten Oberfläche entspricht.

Ein derartiges optisches Bauelement lässt sich insbesondere mit dem lösungsgemäßen Verfahren herstellen und zeichnet sich insbesondere durch eine hohe Integrationsfähigkeit auf Waferebene aus. So lassen sich auf diese Weise Optiken für Laser oder Photodioden zur Ankopplung an optische Lichtwellenleiter, etwa in optische Chips, Leiterplatten, Glasfasern etc. realisieren.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a bis f: Sequenzbilddarstellungen zur Erläuterung des lösungsgemäßen Verfahrens zur berührungslosen Herstellung einer Oberfläche eines glasartigen Materials,
- Fig. 1g: Verfahrensschritt zur Replikation einer Oberflächenstruktur,
- Fig. 1h: Verwendung eines abgeformten Glassubstrates innerhalb eines optischen Bauelementes,
- Fig. 2a bis g: Sequenzbilddarstellungen zur Illustration einer alternativen berührungslos hergestellten Oberfläche aus glasartigem Material,
- Fig. 2h: Seitenansicht eines optischen Elementes.

### Wege zur Ausführung der Erfindung, gewerbliche Verwendbarkeit

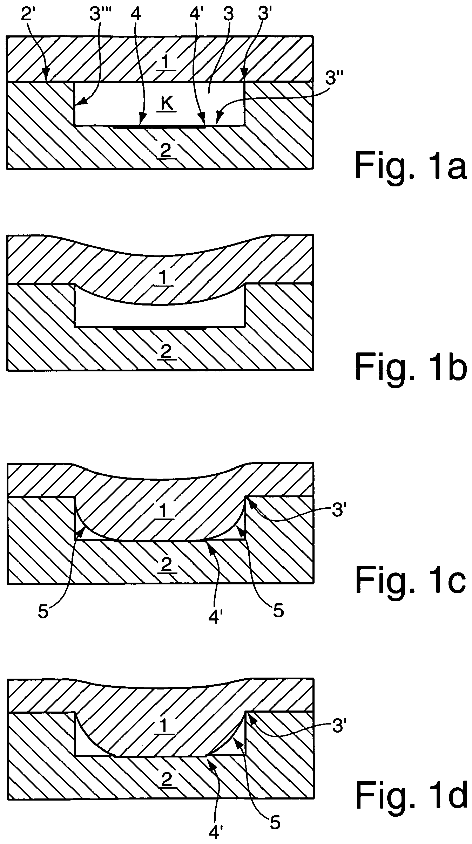

In den Sequenzbilddarstellungen gemäß der Figuren 1a bis f ist jeweils eine Querschnittsdarstellung eines aus glasartigem Material bestehenden Flächensubstrates 1 dargestellt, das auf ein Halbleiterflächensubstrat 2 gefügt ist.

In Fig. 1a ist ein Querschnitt bzw. Teilquerschnitt eines als Siliziumwafer ausgebildeten Halbleiterflächensubstrats 2 dargestellt, an dessen Oberfläche 2' eine Vertiefung 3 eingebracht ist, die von einem an der Oberfläche 2' befindlichen Umfangsrand 3' umgeben ist. Die Vertiefung 3 ist vorzugsweise im Wege eines chemischen Ätzprozesses in das Halbleiterflächensubstrat 2 eingebracht worden. Es sei angenommen, dass die Vertiefung 3, wie im dargestellten Ausführungsbeispiel gezeigt, von einem planen Vertiefungsboden 3" sowie einer den Vertiefungsboden 3" umgebenden Seitenwand 3"' umgeben ist.

Ferner ist auf dem ansonsten eben ausgebildeten Vertiefungsboden 3" ein oberflächenbehandelter Bereich 4 vorgesehen, der im Weiteren als Benetzungsfläche dient, so dass sich bei Benetzung mit fließfähigem, glasartigem Material eine sich dynamisch ausbreitende Benetzungsfront ausbildet, die sich längs der Benetzungsfläche 4 schneller ausbreitet als auf dem nicht oberflächenbehandelten bzw. oberflächenmodizierten Oberflächenbereich des Vertiefungsbodens 3". Eine geeignete Oberflächenmodifizierung sieht beispielsweise eine SiO₂ auf einem Si-Flächensubstrat vor.

Die Benetzungsfläche 4 ist von einem linienartigen Rand 4' begrenzt, an dem eine unstete Änderung einer der Benetzungsfläche 4 zuordenbaren Benetzungseigenschaft für das fließfähige glasartige Material, im vorstehend beschriebenen Sinne, auftritt.

Auf der Oberfläche 2' des Halbleiterflächensubstrates 2 ist das aus Glas bestehende Flächensubstrat 1 gasdicht gefügt, vorzugsweise im Wege anodischen Bondens oder fusion-bondens und schließt auf diese Weise die Vertiefung 3 hermetisch gasdicht ab, so dass die Vertiefung 3 mit dem Flächensubstrat 1 eine hermetisch abgeschlossene Kavität K darstellt.

Im Verfahrensschritt gemäß Fig. 1b wird der vorstehend beschriebene Waferverbund in einem Temperofen (nicht dargestellt) erhitzt, so dass das Glas bzw. das glasartige Material des Flächensubstrats 1 in den Bereich der Kavität K durch viskoses Fließen eindringt. Das viskos fließfähige Glasmaterial tritt in Kontakt mit der Benetzungsfläche 4 unter Ausbildung einer sich lateral längs zur Benetzungsfläche 4 ausbreitenden Benetzungsfront. Die Benetzungsfront breitet sich durch kontinuierliches Nachfließen von Glasmaterial längs zur Benetzungsfläche 4 aus, bis sie an den Rand 4' der oberflächenmodifizierten Benetzungsfläche 4 trifft, an der die Benetzungsfront gestoppt wird. Zeitnah hierzu wird die Prozesstemperatur innerhalb des Temperofens reduziert, wodurch sich die Fließfähigkeit des Glasmaterials des Flächensubstrates 1 ebenfalls reduziert. Dies ist in dem Sequenzbild gemäß Fig. 1c illustriert, in dem zugleich auch die sich berührungslos ausbildenden Oberflächen 5 des Glasmaterials des Flächensubstrats 1 ersichtlich sind. Die freien Oberflächen 5 sind sowohl gegenüber dem Vertiefungsboden 3" sowie auch den Vertiefungswänden 3"' beabstandet und bilden sich kontaktfrei als überhängende Flächenbereiche einerseits zwischen dem Umfangsrand 4' der Benetzungsfläche 4 und andererseits dem Umfangsrand 3' der Vertiefung 3 aus.

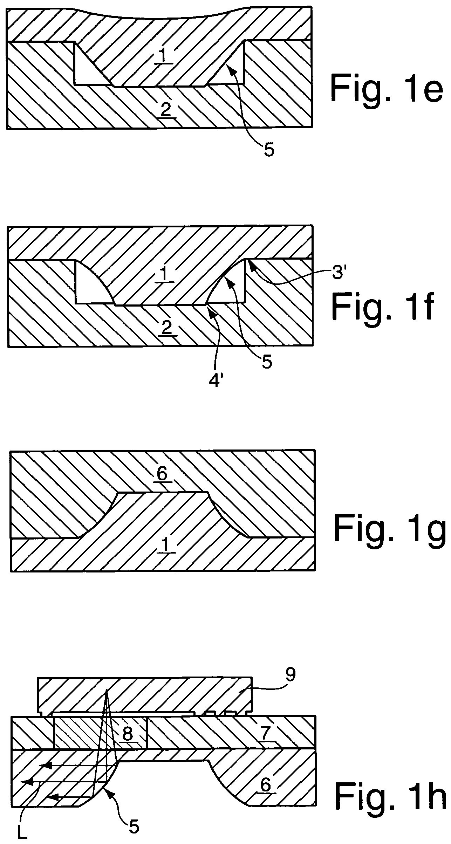

In Fig. 1d ist illustriert, dass durch Reduzierung der Druckverhältnisse innerhalb des Temperofens ein Rückfließen des viskosen Glasmaterials bewirkt werden kann, wodurch die Krümmung der freien Oberflächen 5 variiert im Sinne von reduziert werden kann, siehe im Vergleich zu Fig. 1c. Je nach Prozessführung kann durch eine thermische Nachbehandlung sowie durch geeignete Einstellung der Druckverhältnisse innerhalb des Temperofens eine bestimmte Oberflächenkrümmung an den Oberflächen 5 eingestellt werden. So lässt sich beispielsweise eine gezielte konvexe Form gemäß Fig. 1d, eine plane Oberflächenform gemäß Fig. 1e, sowie eine konkave Oberflächenform gemäß Fig. 1f erzeugen.

Ist eine bestimmte Wunschform der Oberfläche 5 erreicht, so gilt es den Verbund aus Halbleiterflächensubstrat 2 und glasartigem Flächensubstrat 1 zeitlich möglichst rasch aus dem Temperofen in eine Umgebung mit geringerer Umgebungstemperatur zu verbringen, so dass eine Abkühlung des erweichten Glasmaterials rasch erfolgt, um so die Oberflächengeometrie räumlich "einzufrieren". Für gewöhnlich ist es ausreichend, wenn der Substratverbund aus dem Temperofen, in dem Prozesstemperaturen von etwa 800 °C vorherrschen, in einen Abkühlbereich bei Temperaturen von ca. 500° verbracht wird.

Die Form sowie auch die Größe der sich ausbildenden berührungslosen Oberfläche 5 ist einerseits durch die Randgeometrie 4' der Benetzungsfläche 4 sowie die des Umfangsrandes 3' beeinflussbar. Ferner spielt auch der laterale Abstand zwischen beiden Randlinien 4' und 3' eine Rolle für die Spannweite der sich berührungslos ausbildenden Oberfläche 5.

Für eine exakt reproduzierbare Durchführbarkeit des lösungsgemäßen Verfahrens ist ein geometrisch exakt festlegbarer Benetzungsstopp längs der Benetzungsfläche an dessen Begrenzungsrand 4' von entscheidender Bedeutung.

Ausgehend von dem Verfahrensstand gemäß Fig. 1f, bei dem das glasartige Flächensubstrat 1 leicht konvex ausgeformte Oberflächenbereiche 5 aufweist, wird in einem weiteren, nicht dargestellten Prozessschritt das Halbleiterflächensubstrat 2 im Wege eines Ätzverfahrens vom Flächensubstrat 1 entfernt. Das nun isoliert vorliegende einseitig strukturierte Flächensubstrat 1 dient im Weiteren als Replikationsform für einen nachfolgenden Abformvorgang, dessen Resultat in Fig. 1g illustriert ist. Es sei angenommen, dass auf das Flächensubstrat 1 gemäß Fig. 1f ein weiterer Glaswafer 6 aus einem bei niedriger Temperatur schmelzenden Glas unter Vakuumbedingungen auf die strukturierte Oberseite des Flächensubstrats 1 gebondet worden ist. Im Wege eines nachfolgenden Temperprozesses schmiegt sich der Glaswafer 6 konturgetreu an die Oberflächenform des Flächensubstrates 1 an, wie dies in Fig. 1g ersichtlich ist. Bei der Durchführung des Temperprozesses wird eine Prozesstemperatur gewählt, bei der das als Replikationsform dienende Flächensubstrat 1 formstabil bleibt, so dass die Replikationsform mehrfach eingesetzt werden kann. Zur Trennung des als Replikationsform dienenden Flächensubstrats 1 von dem oberflächenstrukturierten Glaswafer 6 dient eine zuvor auf dem oberflächenstrukturierten Flächensubstrat 1 aufgebrachte Schicht, beispielsweise aus Silizium oder Germanium, die abschließend herausgeätzt werden kann, ohne dabei die Oberflächenstrukturen sowohl des Glaswafers 6 als auch des Flächensubstrates 1 zu schädigen.

In Fig. 1h ist ein optisches Bauelement in Querschnittsdarstellung gezeigt, das den vorstehend beschriebenen, oberflächenstrukturierten Glaswafer 6 nutzt. Der Glaswafer 6 mit dem lösungsgemäß erzeugten Höhenprofil wird an seiner eben ausgebildeten Oberfläche mit einem Siliziumwafer 7 gebondet. Mit Hilfe einer geeignet gewählten Ätztechnik ist in dem Siliziumwafer 7 ein optisch transparentes Fenster 8 eingebracht. Das optisch transparente Fenster 8 liegt hierbei über der Oberflächenform 5, die sich durch konturgetreue Abformung von der lösungsgemäß hergestellten Oberfläche 5 des Flächensubstrates 1 ergibt.

Der in Fig. 1h dargestellte Glaswafer 6 wird entweder lokal an der Oberfläche 5 oder ganzflächig an der strukturierten Oberfläche verspiegelt. Ferner sitzt auf der Oberfläche des Siliziumwafers 7 ein Lichtemitter 9 auf, beispielsweise eine vertikal emittierende Laserdiode, die gegenüber dem optisch transparenten Fenster 8 derart platziert ist, so dass der aus dem Lichtemitter 9 austretende Lichtstrahl L auf die leicht konkav geformte, verspiegelte Oberfläche 5 trifft. An dieser findet eine Umlenkung des Lichtstrahls L zur Seite bei gleichzeitiger Fokussierung oder Kollimation in einer oder zwei Achsen statt.

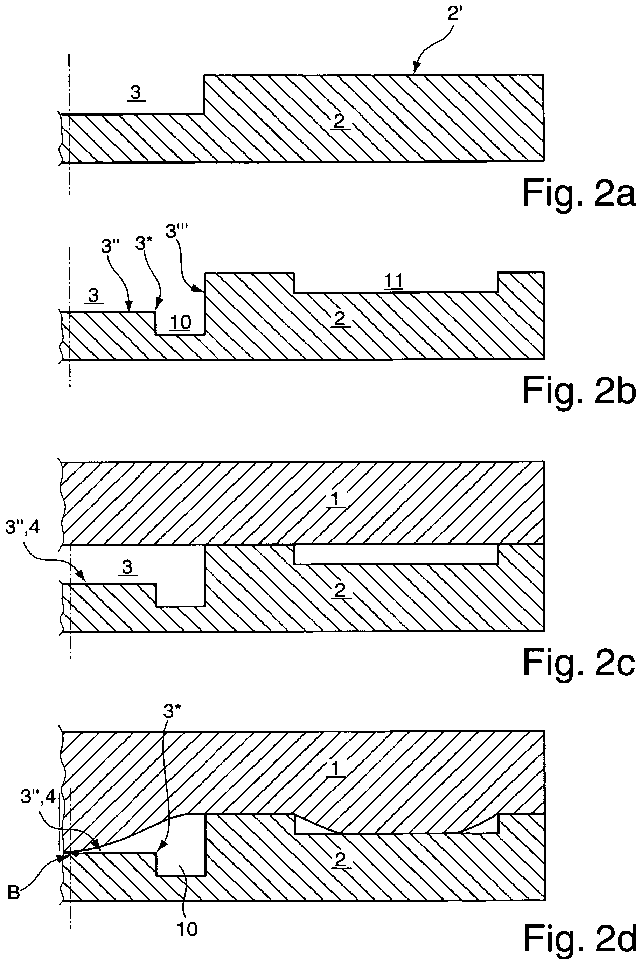

In den Sequenzbilddarstellungen gemäß den Figuren 2a bis 2g ist eine zweite lösungsgemäße Verfahrensvariante zur berührungslosen Herstellung einer optischen Oberfläche 5 eines glasartigen Materials illustriert.

In Fig. 2a ist ein Halbleiterflächensubstrat 2, vorzugsweise in Form eines Siliziumwafers, in einer Querschnittsdarstellung illustriert, der mit geeigneter Ätztechnik an einer Oberfläche 2' eine Vertiefung 3 vorsieht. Im Weiteren sei angenommen, dass das Halbleiterflächensubstrat 2 sowie auch die Vertiefung 3 links von der strichpunktierten Linie in geeigneter Weise, vorzugsweise spiegelsymmetrisch, fortgesetzt sind. In einem zweiten Ätzschritt wird im Bereich der Vertiefung 3 eine Grabenstruktur 10 eingebracht, die den Vertiefungsboden 3" zumindest bereichsweise peripher umgibt. Die Grabenstruktur 10 schließt in dem in Fig. 2b dargestellten Ausführungsbeispiel bündig an der Vertiefungswand 3"' an.

Durch das Vorsehen einer Grabenstruktur 10 unmittelbar angrenzend zum Vertiefungsboden 3" erhält der Vertiefungsboden 3" eine diesen umgrenzende Randlinie 3*, die im Weiteren als Benetzungsfrontstopp für die Ausbreitung einer viskos fließfähigen Glasmasse dient. Optional können im Rahmen des zweiten Ätzschrittes weitere Vertiefungen 11 in die Oberfläche des Halbleiterflächensubstrats 2 eingebracht werden, die für das lösungsgemäße Verfahren jedoch ohne wesentliche Bedeutung sind.

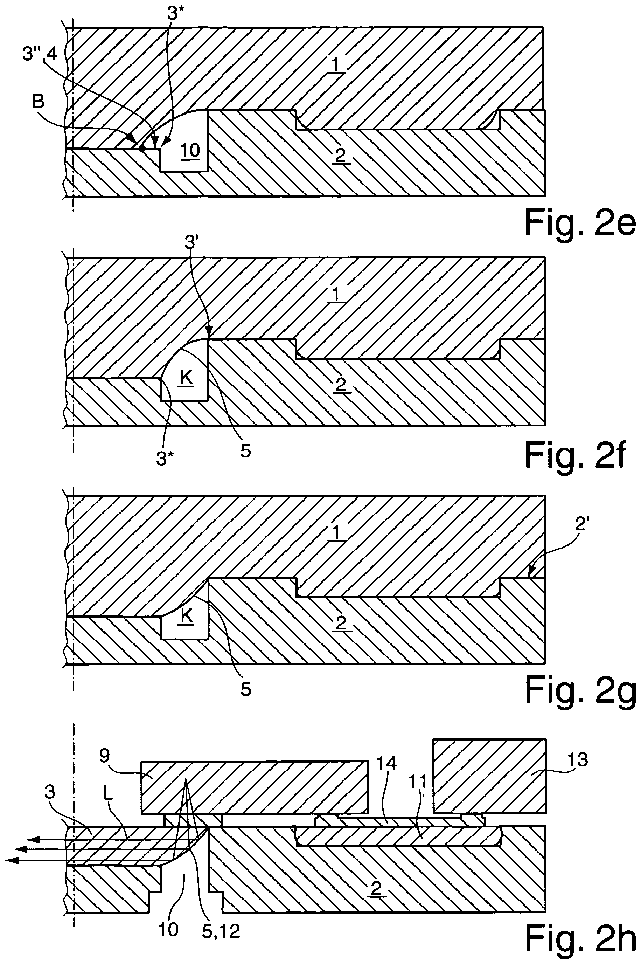

In Fig. 2c ist der Verfahrensschritt dargestellt, bei dem auf die Oberfläche des Halbleiterflächensubstrats 2 ein aus glasartigem Material bestehendes Flächensubstrat 1 aufgebondet wird. Hierbei schließt wiederum das Flächensubstrat 1 im Bereich der Vertiefung 3 eine Kavität K gasdicht ein. Durch Erhöhen der Prozesstemperatur innerhalb eines Temperofens, in den die beiden gebondeten Flächensubstrate 1, 2 eingebracht werden, findet ein viskoses Fließen des glasartigen Materials in die Vertiefungen 3, 11 statt, wobei die Glasmasse des Flächensubstrates 1 den als Benetzungsfläche 4 dienenden Vertiefungsboden 3" zu benetzen beginnt (siehe hierzu Fig. 2d). Durch Absenken der Glasmasse auf den Vertiefungsboden 3" erfolgt ein laterales Fortschreiten der Benetzungsfront B in Richtung der durch die Grabenstruktur 10 vorgegebenen Randlinie 3* des Vertiefungsbodens 3" (siehe Fig. 2e). Bei Erreichen der Benetzungsfront B am Ort der Randlinie 3* stoppt die laterale Benetzung des als Benetzungsfläche dienenden Vertiefungsbodens 3", ohne die Grabenstruktur 10 zu verfüllen. Bei Erreichen dieses Benetzungszustandes gemäß Fig. 2f wird die Prozesstemperatur innerhalb des Temperofens reduziert, so dass ein Verfüllen der Grabenstruktur 10 sicher verhindert wird. Auf diese Weise bildet sich eine freie Oberfläche 5 des glasartigen Materials aus, die sich vom unteren Rand, d.h. von der Randlinie 3* des Vertiefungsbodens 3" berührungslos zum oberen Umfangsrand 3' der Vertiefung 3 erstreckt. Je nach den vorherrschenden Druckverhältnissen zwischen dem Arbeitsdruck innerhalb des Temperofens und dem in der Kavität K eingeschlossenen Druckes bildet sich eine konvex oder konkav oder geradlinig geformte Oberfläche aus. Durch Veränderung der Druckverhältnisse zwischen Temperofen-Arbeitsdruck und der Kavität K sowie auch ergänzend durch Änderung der Prozesstemperatur innerhalb des Temperofens kann die Ausprägung des Meniskus, d.h. der Krümmung der Oberfläche 5, derart verändert werden, dass dieser in senkrechter Richtung konkav, konvex oder geradlinig ausgebildet ist.

Ausgehend von der in Fig. 2g dargestellten Flächensubstratkombination bestehend aus einem einseitig strukturierten Halbleiterflächensubstrat 2 sowie einem ebenfalls im Wege eines lösungsgemäß durchgeführten Fließverfahrens einseitig strukturierten, aus glasartigem Material bestehenden Flächensubstrats 1 wird das in Fig. 2h illustrierte optische Element gefertigt. Hierzu wird zunächst das aus glasartigem Material bestehende Flächensubstrat 1 bündig zur Oberfläche 2' des Halbleiterflächensubstrats 2 abgetragen, so dass lediglich Glasmaterial innerhalb der Vertiefungen 3 und 11 verbleibt. Ferner wird das Halbleiterflächensubstrat im Bereich der Grabenstruktur 10 mittels Ätztechnik nach unten geöffnet. Hierdurch wird ein unterer Zugang zu der lösungsgemäß, berührungslos hergestellten Oberfläche 5 geschaffen, so dass die Oberfläche 5 einseitig mit einer Spiegelschicht 12 versehen werden kann. Somit dient die freie Glasoberfläche 5 als Spiegelelement zur Fokussierung eines vertikal zur Oberfläche eingekoppelten Strahlenbündels L einer Laserdiode 9, die auf der Oberfläche der Schichtanordnung, wie dargestellt, aufgebracht ist. Zusätzlich ist ein Treiberchip 13 vorgesehen, der zur hochfrequenten Modulation des aus der Laserdiode 9 emittierenden Lichtsignals dient. Hierzu ist der Treiberchip 13 mit der Laserdiode 9 über eine elektrische Leitung 14 verbunden, die dielektrisch vom Halbleiterflächensubstrat 2 durch das in der Kavität 11 eingebrachte Glas des Flächensubstrats 1 entkoppelt ist.

### Bezugszeichenliste

- 1: Flächensubstrat
- 2: Halbleiterflächensubstrat
- 2': Oberfläche des Halbleiterflächensubstrats
- 3: Vertiefung
- 3': Umfangsrand der Vertiefung
- 3": Vertiefungsboden
- 3"': Vertiefungswand
- 3*: Randlinie des Vertiefungsbodens
- 4: Oberflächenmodifizierter Vertiefungsboden, Hilfs- bzw. Benetzungsfläche
- 5: Berührungslos erstreckende Oberfläche des glasartigen Materials
- 6: Glaswafer aus einem niederschmelzenden Material als 1
- 7: Siliziumwafer
- 8: Transparentes Fenster
- 9: Lichtemitter, Laserdiode
- 10: Grabenstruktur
- 11: Zweite Vertiefung
- 12: Reflektierende Schicht
- 13: Treiberchip
- 14: Verbindungsleitung
- B: Benetzungsfront
- K: Kavität
- L: Laserstrahl

## Patentansprüche

1. Verfahren zum Strukturieren eines aus glasartigem Material bestehenden Flächensubstrats (1), im folgenden glasartiges Flächensubstrat, im Wege eines viskosen Fliessprozesses, bei dem das glasartige Flächensubstrat (1) auf eine Oberfläche (2') eines anderen Flächensubstrats (2), das wenigstens eine von einem in der Oberfläche (2') liegenden Umfangsrand (3') begrenzte Vertiefung (3) besitzt, gefügt und im Wege eines darauf folgenden Temperprozesses in einen viskos fliessfähigen Zustand überführt wird, bei dem zumindest Anteile des fliessfähigen glasartigen Materials des glasartigen Flächensubstrat (1) über den Umfangsrand (3') in die Vertiefung (3) des anderen Flächensubstrats (2) fliessen, **gekennzeichnet, durch** folgende Verfahrensschritte:
- Bereitstellen des anderen Flächensubstrats (2) derart, dass in dessen wenigstens einen Vertiefung (3) wenigstens eine Benetzungsfläche (4) vorhanden ist, die gegenüber der Oberfläche (2') des anderen Flächensubstrats (2) abgesenkt und wenigstens teilweise von einem linienartigen Rand begrenzt ist, der zugleich ein Rand (3*) einer gegenüber der Benetzungsfläche (4) abgesenkten innerhalb der Vertiefung (3) vorgesehenen Grabenstruktur (10) ist,
- Durchführen des Temperprozesses derart, dass das fliessfähige glasartige Material des glasartigen Flächensubstrats (1) mit der Benetzungsfläche (4) derart in Kontakt gebracht wird, dass sich längs des linienartigen Randes eine Benetzungsfront (B) ausbildet, und
- Beenden des Temperprozesses nach Ausbildung einer sich zwischen der Benetzungsfront (B) und dem Umfangsrand (3') berührungslos zum anderen Flächensubstrat (2) erstreckenden Oberfläche (5) des glasartigen Materials, die mit einem Teilbereich der Vertiefung (3) eine Kavität (K) einschliesst.

2. Verfahren zum Strukturieren eines aus glasartigem Material bestehenden Flächensubstrats (1), im folgenden glasartiges Flächensubstrat, im Wege eines viskosen Fliessprozesses, bei dem das glasartige Flächensubstrat (1) auf eine Oberfläche (2') eines anderen Flächensubstrats (2), das wenigstens eine von einem in der Oberfläche (2') liegenden Umfangsrand (3') begrenzte Vertiefung (3) besitzt, gefügt und im Wege eines darauf folgenden Temperprozesses in einen viskos fliessfähigen Zustand überführt wird, bei dem zumindest Anteile des fliessfähigen glasartigen Materials des glasartigen Flächensubstrat (1) über den Umfangsrand (3') in die Vertiefung (3) des anderen Flächensubstrats (2) fliessen, **gekennzeichnet, durch** folgende Verfahrensschritte:
- Bereitstellen des anderen Flächensubstrats (2) derart, dass in dessen wenigstens einen Vertiefung (3) wenigstens eine Benetzungsfläche (4) vorhanden ist, die gegenüber der Oberfläche (2') des anderen Flächensubstrats (2) abgesenkt und wenigstens teilweise von einem linienartigen Rand begrenzt ist, der durch eine unstete Änderung einer der Benetzungsfläche (4) zuordenbaren Benetzungseigenschaft für das fliessfähige glasartige Material bestimmt ist, wobei die Benetzungseigenschaft der Benetzungsfläche (4) durch eine Oberflächenmodifikation derart gewählt wird, dass bei der Benetzung der Benetzungsoberfläche (4) mit dem fliessfähigen, glasartigen Material eine sich dynamisch ausbreitende Benetzungsfront (B) ausbildet, die sich schneller ausbreitet als auf einer nicht oberflächenmodifizierten Oberfläche,
- Durchführen des Temperprozesses derart, dass das fliessfähige glasartige Material des glasartigen Flächensubstrats (1) mit der Benetzungsfläche (4) derart in Kontakt gebracht wird, dass sich längs des linienartigen Randes eine Benetzungsfront (B) ausbildet, und
- Beenden des Temperprozesses nach Ausbildung einer sich zwischen der Benetzungsfront (B) und dem Umfangsrand (3') berührungslos zum anderen Flächensubstrat (2) erstreckenden Oberfläche (5) des glasartigen Materials, die mit einem Teilbereich der Vertiefung (3) eine Kavität (K) einschliesst.

3. Verfahren zum Strukturieren eines aus glasartigem Material bestehenden Flächensubstrats (1), im folgenden glasartiges Flächensubstrat, im Wege eines viskosen Fliessprozesses, bei dem das glasartige Flächensubstrat (1) auf eine Oberfläche (2') eines anderen Flächensubstrats (2), das wenigstens eine von einem in der Oberfläche (2') liegenden Umfangsrand (3') begrenzte Vertiefung (3) besitzt, gefügt und im Wege eines darauf folgenden Temperprozesses in einen viskos fliessfähigen Zustand überführt wird, bei dem zumindest Anteile des fliessfähigen glasartigen Materials des glasartigen Flächensubstrat (1) über den Umfangsrand (3') in die Vertiefung (3) des anderen Flächensubstrats (2) fliessen, **gekennzeichnet, durch** folgende Verfahrensschritte:
- Bereitstellen des anderen Flächensubstrats (2) derart, dass in dessen wenigstens einen Vertiefung (3) wenigstens eine Benetzungsfläche (4) vorhanden ist, die gegenüber der Oberfläche (2') des anderen Flächensubstrats (2) abgesenkt und wenigstens teilweise von einem linienartigen Rand begrenzt ist, der zugleich ein Rand (3*) einer gegenüber der Benetzungsfläche (4) abgesenkten innerhalb der Vertiefung (3) vorgesehenen Grabenstruktur (10) ist und durch eine unstete Änderung einer der Benetzungsfläche (4) zuordenbaren Benetzungseigenschaft für das fliessfähige glasartige Material bestimmt ist, wobei die Benetzungseigenschaft der Benetzungsfläche (4) durch eine Oberflächenmodifikation derart gewählt wird, dass bei der Benetzung der Benetzungsoberfläche (4) mit dem fliessfähigen, glasartigen Material eine sich dynamisch ausbreitende Benetzungsfront (B) ausbildet, die sich schneller ausbreitet als auf einer nicht oberflächenmodifizierten Oberfläche,
- Durchführen des Temperprozesses derart, dass das fliessfähige glasartige Material des glasartigen Flächensubstrats (1) mit der Benetzungsfläche (4) derart in Kontakt gebracht wird, dass sich längs des linienartigen Randes eine Benetzungsfront (B) ausbildet, und
- Beenden des Temperprozesses nach Ausbildung einer sich zwischen der Benetzungsfront (B) und dem Umfangsrand (3') berührungslos zum anderen Flächensubstrat (2) erstreckenden Oberfläche (5) des glasartigen Materials, die mit einem Teilbereich der Vertiefung (3) eine Kavität (K) einschliesst.

4. Verfahren nach einem der Ansprüche 1 bis 3,
**dadurch gekennzeichnet, dass** das Fügen des glasartigen Flächensubstrats (1) auf die Oberfläche (2') des anderen Flächensubstrats (2) mittels anodischem Bonden oder Direktbonden (fusion bonding) erfolgt.

5. Verfahren nach einem der Ansprüche 1 bis 4,
**dadurch gekennzeichnet, dass** das glasartige Flächensubstrat (1) die wenigstens eine Vertiefung (3) unter Ausbildung einer geschlossenen Kavität (K) gasdicht verschließt, und
dass das Fügen des glasartigen Flächensubstrats (1) in Gegenwart einer Gasatmosphäre mit einem vorgebbaren Prozessdruck erfolgt, so dass unmittelbar nach dem Fügen innerhalb der sich ausbildenden Kavität (K) ein Teil der Gasatmosphäre eingeschlossen wird.

6. Verfahren nach Anspruch 5,
**dadurch gekennzeichnet, dass** während des Temperns durch kontrollierte Änderung des Prozessdruckes Einfluss auf die Form der sich zwischen der Benetzungsfront (B) und dem Umfangsrand (3') berührungslos zum anderen Flächensubstrat (2) erstreckenden Oberfläche (5) des glasartigen Materials genommen wird.

7. Verfahren nach Anspruch 6,
**dadurch gekennzeichnet, dass** durch Reduzierung des Prozessdruckes die sich zwischen der Benetzungsfront (B) und dem Umfangsrand (3') berührungslos zum anderen Flächensubstrat (2) erstreckende Oberfläche (5) des glasartigen Materials konkav und bei Erhöhen des Prozessdruckes konvex verformt.

8. Verfahren nach Anspruch 5,
**dadurch gekennzeichnet, dass** der Tempervorgang wenigstens einmalig unterbrochen wird, dass ein offener Zugang zu der wenigstens einen Kavität (K) geschaffen wird, und
dass der Tempervorgang fortgesetzt wird.

9. Verfahren nach Anspruch 8,
**dadurch gekennzeichnet, dass** der Tempervorgang wenigstens ein weiteres Mal unterbrochen wird, dass der wenigstens eine offene Zugang verschlossen wird, und dass der Tempervorgang fortgesetzt wird.

10. Verfahren nach einem der Ansprüche 1 bis 9,
**dadurch gekennzeichnet, dass** nach Beenden des Temperprozesses das glasartige Flächensubstrat (1) vom anderen Flächensubstrat (2) zum Erhalt einer strukturierten Oberfläche des glasartigen Flächensubstrates (1) formerhaltend getrennt wird, und
dass die strukturierte Oberfläche des glasartigen Flächensubstrats (1) als Replikaform verwendet wird.

11. Verfahren nach einem der Ansprüche 1 bis 9,
**dadurch gekennzeichnet, dass** nach Beenden des Temperprozesses das glasartige Flächensubstrat (1) vollständig oder in Teilbereichen vom anderen Flächensubstrat (2) zum Erhalt einer strukturierten Oberfläche des glasartigen Flächensubstrates (1) formerhaltend getrennt wird, und
dass zumindest die sich zwischen der Benetzungsfront (B) oder ursprünglich zwischen der Benetzungsfront (B) und dem Umfangsrand (3') berührungslos zum anderen Flächensubstrat (2) erstreckende Oberfläche (5) des glasartigen Materials als optisch wirksame Oberfläche eines optischen Elementes verwendet wird.

12. Verfahren nach einem der Ansprüche 1 bis 11,
**dadurch gekennzeichnet, dass** das andere Flächensubstrat (2) aus einem Material besteht, das über eine höhere Schmelztemperatur verfügt, als das glasartige Flächensubstrat (1).

13. Verfahren nach einem der Ansprüche 1 bis 12,
**dadurch gekennzeichnet, dass** als anderes Flächensubstrat (2) ein Halbleitersubstrat oder Keramiksubstrat verwendet wird.

14. Optisches Bauelement mit einer optisch wirksamen Fläche (5), die Teil eines strukturierten, aus glasartigem Material bestehenden Flächensubstrats (1) ist und der eine optische Achse zuordenbar ist, die mit einer dem glasartigen Flächensubstrat (1) zuordenbaren Flächensubstratebene einen Winkel α einschließt, der ungleich 0° und 90° ist, wobei die optisch wirksame Fläche (5) eine Oberflächenglätte aufweist, die mittel oder unmittelbar mit einem Verfahren nach einem der Ansprüche 1 bis 9 hergestellt ist, wobei die optisch wirksame Fläche (5) der sich zwischen der Benetzungsfront (B) und dem Umfangsrand (3') berührungslos zum anderen Flächensubstrat (2) erstreckenden Oberfläche (5) des glasartigen Materials oder einer Replikationsform von dieser entspricht.

15. Optisches Bauelement nach Anspruch 14,
**dadurch gekennzeichnet, dass** das strukturierte, aus glasartigem Material bestehende Flächensubstrat (1) eine strukturierte und eine dieser gegenüberliegende plane Oberfläche, die mit der Flächensubstratebene zusammenfällt, aufweist,
dass mittel- oder unmittelbar an der planen Oberfläche eine Lichtquelle (9) angeordnet ist, die Licht (L) über die plane Oberfläche in das strukturierte, aus glasartigen Material bestehende Flächensubstrat (1) derart einkoppelt, dass das Licht (L) an der optisch wirksamen Fläche (5) innerhalb des aus glasartigen Material bestehenden Flächensubstrats (1) umlenkbar ist.

## Claims

1. A method for structuring a flat substrate (1) composed of glass-type material in the following glass-type flat substrate in the course of a viscous flow process in which the glass-type flat substrate (1) is joined to a surface (2') of another flat substrate (2) which has at least one depression (3) bounded by a circumferential edge (3') located in the surface (2') and, in the course of a subsequent tempering process, is changed to a viscous free-flowing state in which at least proportions of the free-flowing glass-type material of the glass-type flat substrate (1) flow over the circumferential edge (3') into the depression (3) in the other flat substrate (2), **characterised by** the following method-related steps:
- providing the other flat substrate (2) in such a way that in its at least one depression (3) at least one wetting surface (4) is present that is countersunk with respect to the surface (2') of the other flat substrate (2) and is at least partly bounded by a line-type edge which, at the same time, is an edge (3*) of a trench structure (10) provided within the depression (3) and countersunk with respect to the wetting surface (4) ;
- carrying out the tempering process in such a way that the free-flowing glass-type material of the glass-type flat substrate (1) is brought into contact with the wetting surface (4) in such a way that a wetting front (B) forms along the line-type edge, and
- ending the tempering process after the formation of a surface (5) of the glass-type material, which surface (5) extends between the wetting front (B) and the circumferential edge (3') without contact with the other flat substrate (2) and that encloses a cavity (K) with a sub-region of the depression (3).

2. A method for structuring a flat substrate (1) composed of glass-type material in the following glass-type flat substrate in the course of a viscous flow process in which the glass-type flat substrate (1) is joined to a surface (2') of another flat substrate (2) which has at least one depression (3) bounded by a circumferential edge (3') located in the surface (2') and, in the course of a subsequent tempering process, is changed to a viscous free-flowing state in which at least proportions of the free-flowing glass-type material of the glass-type flat substrate (1) flow over the circumferential edge (3') into the depression (3) in the other flat substrate (2), **characterised by** the following method-related steps:
- providing the other flat substrate (2) in such a way that in its at least one depression (3) at least one wetting surface (4) is present that is countersunk with respect to the surface (2') of the other flat substrate (2) and is at least partly bounded by a line-type edge which is determined by a discontinuous change in a wetting property for the free-flowing glass-type material that can be assigned to the wetting surface (4), wherein the wetting property of the wetting surface (4) is selected in such a way by surface modification that during wetting of the wetting surface (4) with the free-flowing glass-type material a dynamically spreading wetting front (B) forms that spreads faster than on a non-surface-modified surface;
- carrying out the tempering process in such a way that the free-flowing glass-type material of the glass-type flat substrate (1) is brought into contact with the wetting surface (4) in such a way that a wetting front (B) forms along the line-type edge, and
- ending the tempering process after the formation of a surface (5) of the glass-type material, which surface (5) extends between the wetting front (B) and the circumferential edge (3') without contact with the other flat substrate (2) and that encloses a cavity (K) with a sub-region of the depression (3).

3. A method for structuring a flat substrate (1) composed of glass-type material in the following glass-type flat substrate in the course of a viscous flow process in which the glass-type flat substrate (1) is joined to a surface (2') of another flat substrate (2) which has at least one depression (3) bounded by a circumferential edge (3') located in the surface (2') and, in the course of a subsequent tempering process, is changed to a viscous free-flowing state in which at least proportions of the free-flowing glass-type material of the glass-type flat substrate (1) flow over the circumferential edge (3') into the depression (3) in the other flat substrate (2), **characterised by** the following method-related steps:
- providing the other flat substrate (2) in such a way that in its at least one depression (3) at least one wetting surface (4) is present that is countersunk with respect to the surface (2') of the other flat substrate (2) and is at least partly bounded by a line-type edge which, at the same time, is an edge (3*) of a trench structure (10) provided within the depression (3) which is countersunk with respect to the wetting surface (4) and is determined by a discontinuous change in a wetting property for the free-flowing glass-type material that can be assigned to the wetting surface (4), wherein the wetting property of the wetting surface (4) is selected in such a way by surface modification that during wetting of the wetting surface (4) with the free-flowing glass-type material a dynamically spreading wetting front (B) forms that spreads faster than on a non-surface-modified surface;
- carrying out the tempering process in such a way that the free-flowing glass-type material of the glass-type flat substrate (1) is brought into contact with the wetting surface (4) in such a way that a wetting front (B) forms along the line-type edge, and
- ending the tempering process after the formation of a surface (5) of the glass-type material, which surface (5) extends between the wetting front (B) and the circumferential edge (3') without contact with the other flat substrate (2) and that encloses a cavity (K) with a sub-region of the depression (3).

4. The method according to any one of claims 1 to 3,
**characterised in that** joining the glass-type flat substrate (1) to the surface (2') of the other flat substrate (2) takes place by means of anodic bonding or direct bonding (fusion bonding).

5. The method according to any one of claims 1 to 4,
**characterised in that** the glass-type flat substrate (1) closes off the at least one depression (3) in a gas-proof way so as to form a closed cavity (K), and
**in that** joining the glass-like flat substrate (1) takes place in the presence of a gas atmosphere at a predeterminable process pressure so that directly after joining within the cavity (K) that is formed part of the gas atmosphere is enclosed.

6. The method according to claim 5,
**characterised in that** during tempering by way of a controlled change in the process pressure the form of the surface (5) of the glass-type material that extends between the wetting front (B) and the circumferential edge (3') without contact with the other flat substrate (2) is influenced.

7. The method according to claim 6,
**characterised in that** by reducing the process pressure the surface (5) of the glass-type material that extends between the wetting front (B) and the circumferential edge (3') without contact with the other flat substrate (2) is formed so as to be concave, and by increasing the process pressure is formed so as to be convex.

8. The method according to claim 5,
**characterised in that** the tempering process is interrupted at least once, **in that** open access to the at least one cavity (K) is created, and
**in that** the tempering process is continued.

9. The method according to claim 8,
**characterised in that** the tempering process is interrupted at least once more, **in that** the at least one open access is closed, and **in that** the tempering process is continued.

10. The method according to any one of claims 1 to 9,
**characterised in that** after completion of the tempering process the glass-type flat substrate (1) is separated from the other flat substrate (2), so that its form is preserved, in order to obtain a structured surface of the glass-type flat substrate (1), and
**in that** the structured surface of the glass-type flat substrate (1) is used as a replica mould.

11. The method according to any one of claims 1 to 9,
**characterised in that** after completion of the tempering process the glass-type flat substrate (1) is separated, completely or in sub-regions, so that its form is preserved, from the other flat substrate (2) in order to obtain a structured surface of the glass-type flat substrate (1), and
**in that** at least the surface (5) of the glass-type material, which surface (5) extends between the wetting front (B) or originally between the wetting front (B) and the circumferential edge (3') without contact with the other flat substrate (2), is used as an optically effective surface of an optical element.

12. The method according to any one of claims 1 to 11, **characterised in that** the other flat substrate (2) is composed of glass-type material whose melting temperature is higher than that of the glass-type flat substrate (1).

13. The method according to any one of claims 1 to 12,
**characterised in that** a semiconductor substrate or a ceramic substrate is used as the other flat substrate (2).

14. An optical component comprising an optically effective surface (5) that forms part of a structured flat substrate (1) composed of glass-type material, with an optical axis being assignable to said effective surface (5), which optical axis with a flat substrate plane allocateable to the glass-type flat substrate (1) encompasses an angle α that is other than 0° or 90°, wherein the optically effective surface (5) has a surface smoothness which is indirectly or directly manufactured with the use of a method according to any one of claims 1 to 9, wherein the optically effective surface (5) corresponds to the surface (5) of the glass-type material that extends between the wetting front (B) and the circumferential edge (3') without contact with the other flat substrate (2), or corresponds to a replication form of the aforesaid.

15. The optical component according to claim 14,
**characterised in that** the structured flat substrate (1) composed of glass-type material comprises a structured surface and a planar surface opposite said structured surface, which planar surface coincides with the plane of the flat substrate,
**in that** indirectly or directly on the planar surface a light source (9) is arranged that, by way of the planar surface, couples light (L) into the structured flat substrate (1) composed of glass-type material in such a way that the light (L) on the optically effective surface (5) within the flat substrate (1) composed of glass-type material is deflectable.

## Revendications

1. Procédé destiné à la structuration d'un substrat de surface (1) composé d'un matériau vitreux, désigné ci-après substrat de surface vitreux, au cours d'un processus de fluage visqueux, pour lequel le substrat de surface vitreux (1) est ajouté sur une surface (2') d'un autre substrat de surface (2), qui possède au moins une cavité (3) limitée par un bord périphérique (3') situé dans la surface (2') et est transféré au cours d'un processus de recuit subséquent dans un état visqueux fluide, pour lequel au moins des parties du matériau fluide vitreux du substrat vitreux (1) s'écoulent par le bord périphérique (3') dans la cavité (3) de l'autre substrat de surface (2), **caractérisé par** les étapes de procédé suivantes :
- préparation de l'autre substrat de surface (2) de telle manière que dans au moins une cavité (3) de celui-ci il y a au moins une surface d'imprégnation (4), qui est abaissée par rapport à la surface (2') de l'autre substrat de surface (2) et est au moins en partie limitée par un bord linéaire, qui est en même temps un bord (3*) d'une structure de creux (10) abaissée par rapport à la surface d'imprégnation (4) prévue à l'intérieur de la cavité (3),
- exécution du processus de recuit de telle manière que le matériau fluide vitreux du substrat de surface vitreux (1) est mis en contact avec la surface d'imprégnation (4) de telle manière qu'il se constitue un front d'imprégnation (B) le long du bord linéaire, et
- finition du processus de recuit après formation d'une surface (5) du matériau vitreux s'étendant entre le front d'imprégnation (B) et le bord périphérique (3') sans contact avec l'autre substrat de surface (2), qui inclut une cavité (K) avec une partie de zone de la cavité (3).

2. Procédé destiné à la structuration d'un substrat de surface (1) composé d'un matériau vitreux, désigné ci-après substrat de surface vitreux, au cours d'un processus de fluage visqueux, pour lequel le substrat de surface vitreux (1) est ajouté sur une surface (2') d'un autre substrat de surface (2), qui possède au moins une cavité (3) limitée par un bord périphérique (3') situé dans la surface (2') et est transféré au cours d'un processus de recuit subséquent dans un état visqueux fluide, pour lequel au moins des parties du matériau fluide vitreux du substrat vitreux (1) s'écoulent par le bord périphérique (3') dans la cavité (3) de l'autre substrat de surface (2), **caractérisé par** les étapes de procédé suivantes :
- préparation de l'autre substrat de surface (2) de telle manière que dans au moins une cavité (3) de celui-ci il y a au moins une surface d'imprégnation (4), qui est abaissée par rapport à la surface (2') de l'autre substrat de surface (2) et est au moins en partie limitée par un bord linéaire, qui est déterminée par une variation instable d'une propriété d'imprégnation attribuable à la surface d'imprégnation (4) pour le matériau fluide vitreux, la propriété d'imprégnation de la surface d'imprégnation (4) étant choisie par une modification de surface de telle sorte que lors de l'imprégnation de la surface d'imprégnation (4) avec le matériau fluide, vitreux il se constitue un front d'imprégnation (B) se propageant de façon dynamique, qui s'étale plus rapidement que sur une surface non modifiée superficiellement,
- exécution du processus de recuit de telle manière que le matériau fluide vitreux du substrat de surface vitreux (1) est mis en contact avec la surface d'imprégnation (4) de telle manière qu'il se forme un front d'imprégnation (B) le long du bord linéaire, et
- finition du processus de recuit après formation d'une surface (5) du matériau vitreux s'étendant entre le front d'imprégnation (B) et le bord périphérique (3') sans contact avec l'autre substrat de surface (2), qui inclut une cavité (K) avec une partie de zone de la cavité (3).

3. Procédé destiné à la structuration d'un substrat de surface (1) composé d'un matériau vitreux, désigné ci-après substrat de surface vitreux, au cours d'un processus de fluage visqueux, pour lequel le substrat de surface vitreux (1) est ajouté sur une surface (2') d'un autre substrat de surface (2), qui possède au moins une cavité (3) limitée par un bord périphérique (3') situé dans la surface (2') et est transféré au cours d'un processus de recuit subséquent dans un état visqueux fluide, pour lequel au moins des parties du matériau fluide vitreux du substrat vitreux (1) s'écoulent par le bord périphérique (3') dans la cavité (3) de l'autre substrat de surface (2), **caractérisé par** les étapes de procédé suivantes :
- préparation de l'autre substrat de surface (2) de telle manière que dans au moins une cavité (3) de celui-ci il y a au moins une surface d'imprégnation (4), qui est abaissée par rapport à la surface (2') de l'autre substrat de surface (2) et est au moins en partie limitée par un bord linéaire, qui est en même temps un bord (3*) d'une structure de creux (10) abaissée par rapport à la surface d'imprégnation (4) prévue à l'intérieur de la cavité (3) et est déterminée par une variation instable d'une propriété d'imprégnation attribuable à la surface d'imprégnation (4) pour le matériau fluide vitreux, la propriété d'imprégnation de la surface d'imprégnation (4) étant choisie par une modification de surface de telle sorte que lors de l'imprégnation de la surface d'imprégnation (4) avec le matériau fluide, vitreux il se constitue un front d'imprégnation (B) se propageant de façon dynamique, qui s'étale plus rapidement que sur une surface non modifiée superficiellement,
- exécution du processus de recuit de telle manière que le matériau fluide vitreux du substrat de surface vitreux (1) est mis en contact avec la surface d'imprégnation (4) de telle manière qu'il se forme un front d'imprégnation (B) le long du bord linéaire, et
- finition du processus de recuit après formation d'une surface (5) du matériau vitreux s'étendant entre le front d'imprégnation (B) et le bord périphérique (3') sans contact avec l'autre substrat de surface (2), qui inclut une cavité (K) avec une partie de zone de la cavité (3).

4. Procédé selon l'une quelconque des revendications 1 à 3,
**caractérisé en ce que** l'assemblage du substrat de surface vitreux (1) à la surface (2') de l'autre substrat de surface (2) a lieu au moyen de liaisons anodiques ou liaisons directes (liaison par fusion).

5. Procédé selon l'une quelconque des revendications 1 à 4,
**caractérisé en ce que** le substrat de surface vitreux (1) ferme hermétiquement aux gaz au moins une cavité (3) en formant une cavité fermée (K), et
**en ce que** l'assemblage du substrat de surface vitreux (1) a lieu en présence d'une atmosphère gazeuse avec une pression de processus préalablement définissable de telle sorte qu'une partie de l'atmosphère gazeuse est enfermée directement après l'assemblage à l'intérieur de la cavité (K) se constituant.

6. Procédé selon la revendication 5,
**caractérisé en ce que** pendant le recuit, une modification contrôlée de la pression de processus exerce une influence sur la forme de la surface (5) du matériau vitreux s'étendant sans contact avec l'autre substrat de surface (2) entre le front d'imprégnation (B) et le bord périphérique (3').

7. Procédé selon la revendication 6,
**caractérisé en ce qu'**en réduisant la pression de processus, la surface (5) du matériau vitreux s'étendant sans contact avec l'autre substrat de surface (2) entre le front d'imprégnation (B) et le bord périphérique (3') est déformée de façon concave et de façon convexe en augmentant la pression de processus.

8. Procédé selon la revendication 5,
**caractérisé en ce que** l'opération de recuit est interrompue au moins une fois, **en ce qu'**un accès ouvert est créé à au moins une cavité (K) et
**en ce que** l'opération de recuit se poursuit.

9. Procédé selon la revendication 8,
**caractérisé en ce que** l'opération de recuit est interrompue une autre fois, **en ce qu'**au moins un accès ouvert est fermé et **en ce que** l'opération de recuit se poursuit.

10. Procédé selon l'une quelconque des revendications 1 à 9,
**caractérisé en ce qu'**une fois le processus de recuit terminé, le substrat de surface vitreux (1) est séparé de l'autre substrat de surface (2) en préservant la forme pour obtenir une surface structurée du substrat de surface vitreux (1) et
**en ce que** la surface structurée du substrat de surface vitreux (1) est utilisée comme forme de réplique.

11. Procédé selon l'une quelconque des revendications 1 à 9,
**caractérisé en ce qu'**une fois le processus de recuit terminé, le substrat de surface vitreux (1) est séparé complètement ou en zones partielles de l'autre substrat de surface (2) en préservant la forme pour obtenir une surface structurée du substrat de surface vitreux (1) et
**en ce qu'**au moins la surface (5) du matériau vitreux s'étendant entre le front d'imprégnation (B) ou originellement entre le front d'imprégnation (B) et le bord périphérique (3') sans contact avec l'autre substrat de surface (2) est utilisée comme surface optiquement active d'un élément optique.

12. Procédé selon l'une quelconque des revendications 1 à 11,
**caractérisé en ce que** l'autre substrat de surface (2) est composé d'un matériau, qui dispose d'une température de fusion plus élevée que le substrat de surface vitreux (1).

13. Procédé selon l'une quelconque des revendications 1 à 12,
**caractérisé en ce qu'**un substrat semi-conducteur ou un substrat céramique est utilisé comme autre substrat de surface (2).

14. Composant optique avec une surface optiquement active (5), qui constitue une partie d'un substrat de surface (1) structuré composé d'un matériau vitreux et à laquelle un axe optique peut être attribué, qui forme un angle α avec un plan de substrat de surface attribuable au substrat de surface vitreux (1), qui est différent de 0° et 90°, la surface optiquement active (5) comportant un lissage de surface qui est réalisé indirectement ou directement avec un procédé selon l'une quelconque des revendications 1 à 9, la surface optiquement active (5) correspondant à la surface (5) du matériau vitreux ou d'une forme de réplique de celui-ci, s'étendant entre le front d'imprégnation (B) et le bord périphérique (3') sans contact avec l'autre substrat de surface (2).

15. Composant optique selon la revendication 14,
**caractérisé en ce que** le substrat de surface (1) structuré composé d'un matériau vitreux comporte une surface structurée et une surface plane opposée à celle-ci qui coïncide avec le plan de substrat de surface,
**en ce qu'**une source lumineuse (9) est directement ou indirectement disposée sur la surface plane, qui injecte la lumière (L) sur la surface plane dans le substrat de surface (1) structuré composé d'un matériau vitreux de telle manière que la lumière (L) peut être renvoyée à la surface optiquement active (5) à l'intérieur du substrat de surface (1) composé de matériau vitreux.
